# FASCICULE DE BREVET EUROPEEN

(11) **EP 0 899 045 B1**
(45) Date de publication et mention de la délivrance du brevet: **21.04.2004**
(21) Numéro de dépôt: 97810608.6
(22) Date de dépôt: 27.08.1997
(51) Int. Cl.: B23B 1/00, B23Q 5/34

(54) **Machine d'usinage multibroche à commande numérique et procédé d'usinage adapté**
Mehrspindeldrehmaschine mit NC-Steuerung und entsprechendes Bearbeitungsverfahren
Multispindle lathe with NC control and machining method therefor

(43) Date de publication de la demande: 03.03.1999
(73) Titulaire: Tornos SA, 2740 Moutier (CH)
(72) Inventeur: Simonin, Jean-Claude, 2740 Moutier (CH)
(74) Mandataire: BOVARD AG - Patentanwälte

(56) Documents cités:
- EP-A- 0 242 870
- CH-A- 641 390
- GB-A- 2 207 478

## Description

La présente invention concerne le domaine des machines d'usinage multibroches à commande numérique.

Les machines d'usinage multibroches, et notamment les tours et machines de décolletage multibroches, sont connus, un exemple de tour étant décrit par exemple dans le document de brevet EP0356389 au nom de la demanderesse. Les tours multibroches comprennent de manière générale un barillet apte à tourner autour d'un axe horizontal, et portant une série de broches, par exemple 6 broches, réparties autour de l'axe du barillet et comportant chacune une pince destinée à maintenir une barre ou une pièce à usiner. Divers outils en regard de chaque broche permettent d'effectuer des opérations d'usinage sur l'avant des barres ou des pièces. Après usinage, le barillet est entraîné en rotation par un dispositif d'indexage, de sorte que le faisceau de barres ou de pièces tenues dans les broches tourne afin que chaque barre atteigne la position d'usinage suivante. Le barillet est verrouillé dès qu'il a atteint la position d'indexage choisie, puis la ou les pinces s'ouvrent en position de ravitaillement pour permettre l'avancement de chaque barre (ravitaillement), et se referment dès que les barres ont avancé d'une longueur prédéterminée. L'usinage de chaque barre peut alors être effectué avec les outils prévus à chaque position d'usinage, et le cycle reprend comme ci-dessus.

Les barres ne peuvent être usinées que lorsqu'elles sont fermement maintenues dans les pinces de serrage; un usinage pendant l'indexation du barillet ou pendant le ravitaillement en barre est donc impossible. Chaque cycle d'usinage comprend donc nécessairement tout d'abord un intervalle improductif, pendant lequel la barre n'est pas usinée, puis un intervalle d'usinage durant lequel la barre est usinée. Le cycle peut aussi comprendre une opération d'usinage à l'arrière de la pièce avec la broche de reprise.

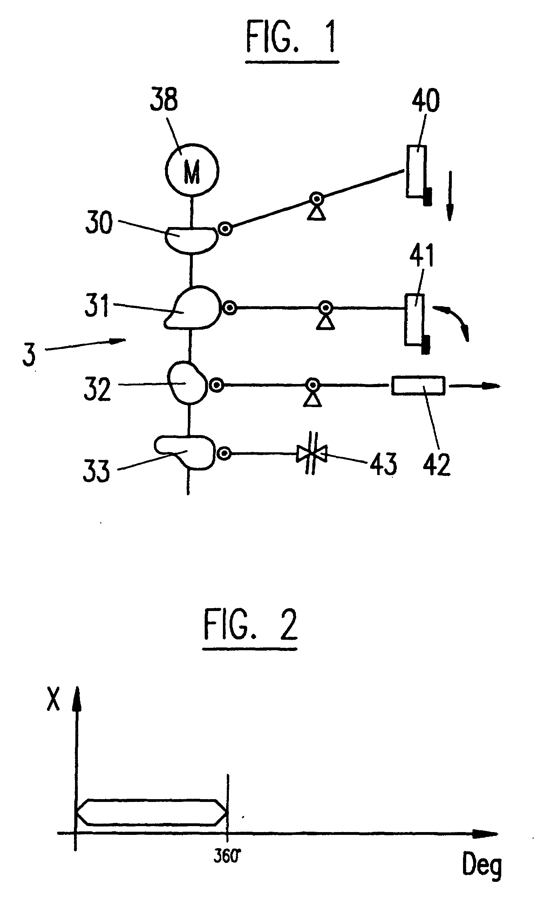

Les mouvements des différents organes et outils, ainsi que les fonctions annexes de la machine, sont déterminés par une commande dont il existe différents types principaux. Les tours et décolleteuses conventionnels sont commandés par un jeu de cames disposées sur un arbre à came. Le profil de chaque came détermine le mouvement d'un organe ou d'un outil au cours de chaque cycle, ou commande diverses autres fonctions. Ce type de commande conventionnel est représenté schématiquement sur la figure 1, qui illustre un arbre à came 3 muni dans cet exemple de quatre cames 30, 31, 32 et 33. L'arbre à came 3 peut être mis en rotation par un moteur 38. Sur l'exemple schématique de cette figure, la position verticale d'un premier outil 40 est déterminée par le profil de la came 30 ; la position angulaire d'un deuxième outil 41 est déterminée par le profil de la deuxième came 31 ; la position horizontale d'un troisième outil 42 est déterminée par le profil de la troisième came 32 et enfin l'actionnement d'un organe, par exemple d'un organe d'arrosage 43, est commandé par la came 33.

La position de chaque outil et la commande de chaque organe est donc à chaque instant une fonction du rayon de la came correspondante au point de contact avec le palpeur. Il n'est cependant pas possible d'employer des cames avec des variations de rayon infinies. Le déplacement d'un axe induit par une rotation d'angle prédéterminé d'une came est donc limité. Par exemple, un déplacement horizontal donné de l'outil 42 nécessitera une rotation de la came 32 d'un nombre minimal de degrés. Un cycle de pièce étant défini par une rotation de 360° de l'arbre à came, la somme maximale des déplacements par cycle est limitée par cette valeur de 360°, comme indiqué schématiquement sur la figure 2.

L'usinage d'un nouveau type de pièces nécessite la conception et la fabrication d'un nouveau jeu de cames et le remplacement des cames installées par ce nouveau jeu. Cette opération est très fastidieuse et l'investissement nécessaire pour l'usinage de nouvelles pièces est nécessairement élevé. En outre, les réglages de la machine doivent être faits mécaniquement au moyen de vis et de verniers.

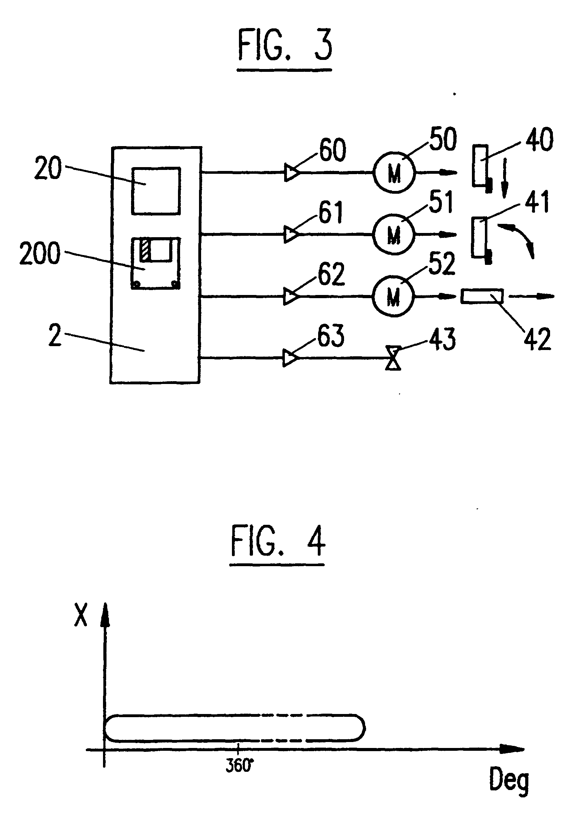

A côté de ces machines à came traditionnelles, on connaît également des machines à commande numérique, dont le principe est illustré schématiquement sur la figure 3. Les différents axes, outils et organes 40 à 43 de la machine sont actionnés par des actionneurs 50 à 52, par exemple par des moyens d'entraînement ou d'actionnement électromécaniques ou hydrauliques. Une commande numérique comporte un calculateur 20 programmé par un programme chargé par exemple au moyen d'un support de données informatique 200. Le calculateur 20 calcule une suite de consignes qui sont transmises par l'intermédiaire de moyens d'amplification 60 à 63 et éventuellement de régulateurs (non représentés) aux actuateurs des différents axes et aux autres organes. Un exemple de commande numérique pour machine-outil est décrit notamment dans la demande de brevet EP0774701.

Ces machines à commande numérique présentent l'avantage d'une grande souplesse, puisqu'un nouveau programme de pièce peut être introduit simplement en chargeant un nouveau programme dans la commande numérique. Comme on le voit en particulier sur la figure 4, le déplacement des axes lors de chaque cycle n'est pas limité par cette barrière de 360° bien connue de l'homme du métier. La vitesse des machines à commande numérique est toutefois généralement inférieure à celle des machines à cames, en raison notamment des limitations propres aux actionneurs et des multiples quittances de fin de course nécessaires.

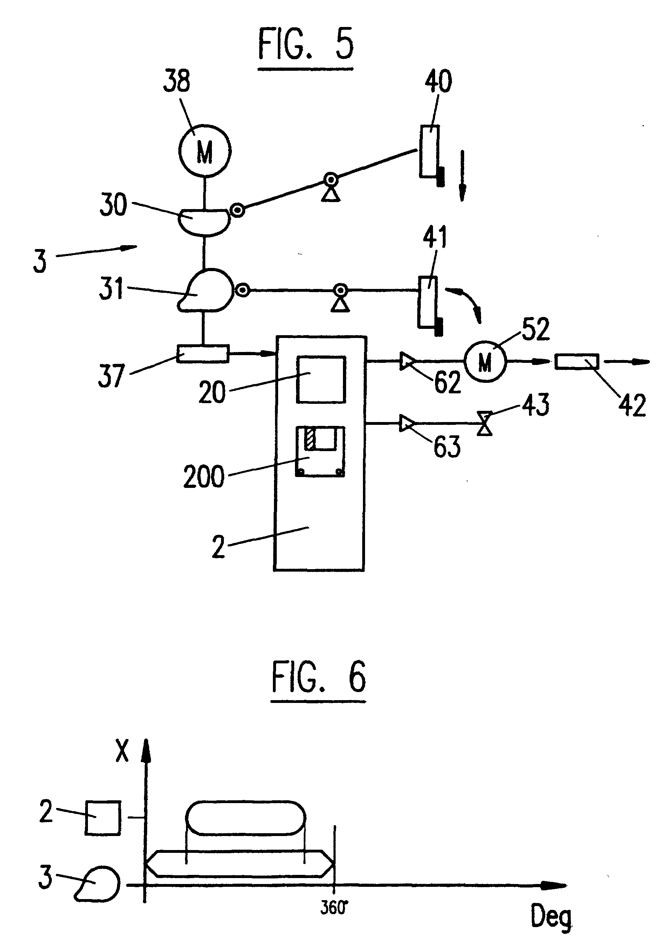

Des machines hybrides sont également connues, dont le principe est illustré schématiquement sur la figure 5. Un arbre à came 3 comporte des cames 30, 31 qui contrôlent certains axes et outils 40, 41, de manière conventionnelle. Un encodeur 37, ou une came particulière, envoie un signal à la commande numérique 2 lorsque l'arbre à came se trouve dans une position angulaire prédéterminée. La commande numérique 2 contrôle alors d'autres axes et organes 42, 43, par exemple des chariots d'outils, par l'intermédiaire d'amplificateurs/régulateurs 62, 63 et d'actionneurs 52.

Ces machines hybrides sont d'un usage convivial grâce à la commande numérique, tandis que les fonctions commandées directement par les cames sont très rapides. Des usinages complexes peuvent être obtenus grâce à l'électronique 2. Malheureusement, comme le montre la figure 6, la limite des 360 ° ne peut pas être contournée : la commande numérique ne contrôle les organes 42, 43 que pendant une fraction de la rotation de l'arbre à came 3. Les déplacements commandés par l'arbre à came sont limités par la restriction à 360°, comme illustré dans la partie inférieure de la figure 5 ; la portion du cycle contrôlée par la commande numérique 2, elle-même esclave de l'arbre à came, est donc nécessairement inférieure à 360°.

Un exemple de tour multibroches à commande hybride est commercialisé par la demanderesse sous l'appellation SAS 16.6.

Le but de la présente invention est de proposer un tour multibroches muni d'une nouvelle commande ainsi qu'un procédé d'usinage sur un tel tour, qui évitent la plupart des inconvénients des tours multibroches et des procédés d'usinage sur tours multibroches connus.

La présente invention concerne également de nouveaux accessoires, tels que cames, commande numérique et support de donnée informatique pour commande numérique, pouvant être utilisé pour commander un tel tour multibroches.

Selon l'invention, ces buts sont atteints au moyen des éléments indiqués dans les revendications indépendantes, diverses variantes de mode de réalisation étant en outre indiquées dans les revendications dépendantes.

L'invention part notamment de la constatation que, pour un certain nombre de fonctions nécessaires dans un tour multibroches, la souplesse fournie par la commande numérique est superflue alors que la limitation de vitesse induite par cette commande est un handicap certain.

Dans un tour multibroches, un certain nombre de fonctions, notamment durant l'intervalle improductif, sont indépendantes de la pièce à usiner. C'est notamment les cas des fonctions d'indexage du barillet, de ravitaillement des barres, de serrage/desserrage des pinces et de verrouillage/déverrouillage du barillet. Dans un tour multibroches à commande numérique, ces fonctions n'ont en principe jamais à être reprogrammées; seuls les déplacements d'axes occasionnés pendant l'intervalle d'usinage dépendent de la pièce à usiner.

Selon l'invention, les fonctions du tour multibroches non spécifiques à la pièce usinée sont commandées par un arbre à came tandis que les fonctions d'usinage dépendantes de la pièce sont commandées directement par la commande numérique. La rotation de l'arbre à came est contrôlée par la commande numérique. De cette manière, les fonctions non spécifiques à la pièce usinée, notamment les fonctions exécutées pendant les intervalles non productifs de chaque cycle d'usinage, peuvent être exécutées très rapidement. La perte de souplesse occasionnée par l'utilisation de cames pour contrôler ces fonctions n'est absolument pas critique, puisque ces fonctions n'ont en principe jamais à être reprogrammées. Les cames peuvent donc être conçues et montées lors de la fabrication du tour multibroches, et n'ont généralement pas à être remplacées, ou du moins pas à chaque programmation de nouvelle pièce.

En revanche, les déplacements des axes et des outils pour les opérations d'usinage, tel qu'usinage par burin de fonçage, usinage par burin de chariotage, travail en bout de perçage, taraudage, prise de pièce, travail à l'arrière de la pièce, etc, sont commandées directement par la commande numérique, et donc avec une souplesse de programmation maximale et une grande flexibilité dans l'élaboration du cycle d'usinage.

A l'opposé des machines hybrides évoquées ci-dessus, la commande numérique est l'élément maître qui commande l'arbre à came fonctionnant comme esclave. L'arbre à came est mis en rotation par un signal envoyé par la commande numérique. Dès que l'arbre à came a effectué une rotation d'un angle prédéterminé, la commande numérique reprend le contrôle de la machine et l'arbre à came est stoppé. Grâce à ce système, la limitation de 360° de la came ne correspond plus à la totalité du cycle, mais seulement à une partie de celui-ci.

L'invention sera mieux comprise à la lecture de la description donnée à titre d'exemple et illustrée par les figures annexées qui montrent :
La figure 1 un schéma de principe d'un système de commande de machine-outil avec un arbre à came, selon l'art antérieur.
La figure 2 un diagramme illustrant la limitation de 360° par cycle dans les machines à came selon la figure 1.
La figure 3 un schéma de principe d'un système de commande de machine-outil à commande numérique, selon l'art antérieur.
La figure 4 un diagramme illustrant l'absence de limitation par cycle dans les machines à commande numérique selon la figure 3.
La figure 5 un schéma de principe d'un système de commande de machine-outil de type hybride, selon l'art antérieur.
La figure 6 un diagramme illustrant la limitation de 360° par cycle dans les machines hybrides selon la figure 5.
La figure 7 un schéma de principe d'un système de commande de tour multibroches selon l'invention.
La figure 8 un diagramme illustrant l'absence de limitation par cycle dans les tours multibroches selon l'invention.
La figure 9 un diagramme indiquant les divers déplacements d'outils et d'organes durant les diverses phases d'un cycle d'usinage, selon la présente invention.

Bien que la description qui suit se rapporte principalement au cas d'un tour multibroches, l'invention concerne également les applications à des machines transfert.

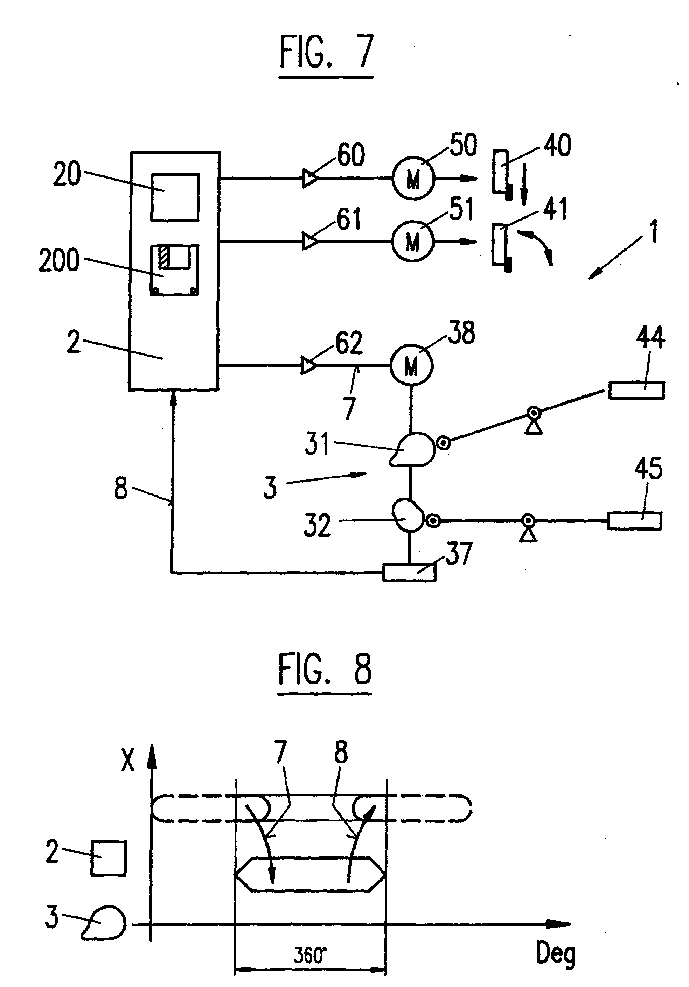

Le tour multibroches 1 de l'invention (figure 7) est commandé par une commande numérique 2, par exemple par une commande numérique commercialisée par la société FANUC sous le nom serie 160i ou 180i, ou par n'importe quel autre modèle de commande numérique adaptée. La commande numérique comporte un écran (non représenté), un clavier (non représenté), des moyens de traitement, par exemple un microprocesseur 20, ainsi que des moyens d'interface non représentés avec la machine-outil. La commande numérique est programmée de manière à pouvoir commander le tour multibroches de la manière revendiquée. Le programme de gestion de la commande numérique peut être chargé par exemple au moyen d'un support de données informatique 200, tel que support magnétique et/ou optique par exemple, contenant un programme informatique adéquat. Un exemple de programme de gestion pour commande numérique est décrit notamment dans les demandes de brevet EP0474603 et EP0774701 au nom de la demanderesse, et dont le contenu est incorporé ici par référence.

Le programme de gestion de commande numérique permet de définir un programme de pièces définissant notamment les déplacements d'outils et d'organes nécessaires pour l'usinage d'une pièce particulière. Le programme de pièces peut par exemple être écrit sur un ordinateur personnel distinct (non représenté), et transféré dans la commande numérique 2 au moyen d'une disquette ou de tout moyen de transport de donnée adapté. Ce programme génère une succession d'ordres de déplacements des différents axes 40, 41 du tour multibroches et permet donc de définir les trajectoires des outils. D'autres fonctions et organes du tour multibroches peuvent en outre être commandés directement par la commande numérique.

Selon l'invention, le tour multibroches de l'invention comporte un arbre à came 3 dont la rotation est commandée par la commande numérique 2. L'arbre à came est muni d'une ou plusieurs cames 31, 32 dont le déroulement du profil détermine le déplacement ou le fonctionnement d'autres organes 44, 45 de la machine-outil. Selon l'invention, l'arbre à came ne contrôle que les fonctions du tour non spécifiques à la pièce usinée, c'est-à-dire les fonctions qui ne doivent pas être reprogrammées pour usiner un nouveau type de pièces. Comme déjà mentionné, les fonctions du tour multibroches exécutées pendant l'intervalle non productif de chaque cycle de pièce sont généralement indépendantes de la pièce à usiner, tandis que la plupart des fonctions et déplacement d'outils effectués pendant l'intervalle d'usinage dépendent de la pièce à usiner. Selon une autre caractéristique de l'invention, le tour est donc commandé pendant l'intervalle non productif par l'intermédiaire de l'arbre à came 3, tandis que les déplacements effectués pendant l'intervalle d'usinage sont commandés directement par la commande numérique 2.

Comme on le voit en particulier sur la figure 8, le cycle d'usinage d'une pièce comprend plusieurs phases distinctes. Pendant un premier intervalle, le tour est commandé uniquement par la commande numérique 2, qui effectue certaines opérations d'initialisation et/ou des opérations dépendant de la pièce à usiner. La commande numérique envoie ensuite un signal 7 au moteur 38 de l'arbre à came 3, de façon à le mettre en rotation. La commande numérique attend ensuite un signal 8 de l'arbre à came pour reprendre le contrôle de la machine-outil.

La rotation de l'arbre à came 3 commande le déplacement d'organes 44, 45 réalisant des fonctions non productives et indépendantes de la pièce du tour multibroches de l'invention. Par exemple, comme on le verra, la rotation de l'arbre à cames 3 commande les fonctions de déverrouillage et indexage du barillet, desserrage des pinces, ravitaillement des barres à usiner, resserrage des pinces, verrouillage du barillet (le ravitaillement pouvant également être effectué par un ravitailleur additionnel). Dès que l'arbre à came a effectué une rotation d'un angle prédéterminé, par exemple 360°, une came particulière ou un encodeur 37 sur l'arbre à came envoie un signal 8 à la commande numérique 2. La commande numérique commande alors l'arrêt de l'arbre à came, et reprend le contrôle du tour multibroches pendant la phase d'usinage des pièces. Pendant cette phase d'usinage, le programme de pièce chargé dans la commande numérique détermine la trajectoire des outils 40, 41.

Comme on peut le voir sur la figure 8, la limitation de 360° ne concerne qu'une portion du cycle de pièce, plus précisément que l'intervalle non productif du cycle de pièces. En revanche, l'intervalle d'usinage n'est pas limité par cette barrière des 360°. Des déplacements importants et des trajectoires complexes peuvent donc être commandés.

La programmation du cycle d'usinage d'une nouvelle pièce est aussi aisée, voire plus aisée que sur une machine à commande numérique conventionnelle. Seules les fonctions et déplacements effectués pendant l'intervalle d'usinage doivent être programmées. Les fonctions indépendantes de la pièce sont commandées par les cames 31, 32 dont le profil a été déterminé une fois pour toutes lors de la conception du tour multibroches. Ces cames n'ont donc pas à être remplacées pour usiner un nouveau type de pièce.

Le programme de gestion de commande numérique selon l'invention peut être constitué par un programme conventionnel, par exemple du type décrit dans les demandes de brevet EP0474603 et EP0774701 susmentionnées, auquel auront été ajoutées de nouvelles fonctionnalités permettant de contrôler l'arbre à came 3. Le programme de gestion de commande numérique comprend à cet effet des fonctionnalités permettant d'établir et/ou d'exécuter des programmes d'usinage de pièces comportant des instructions de mise en rotation de l'arbre à came 3, et d'attente du signal 8 provenant de l'arbre à came. Par exemple, dans le cas où le programme de gestion de commande numérique comporte une interface graphique permettant de définir une séquence d'opérations en plaçant une succession d'icônes sur une surface graphique, des icônes particulières devront être prévues pour les opérations de contrôle de l'arbre à came 3.

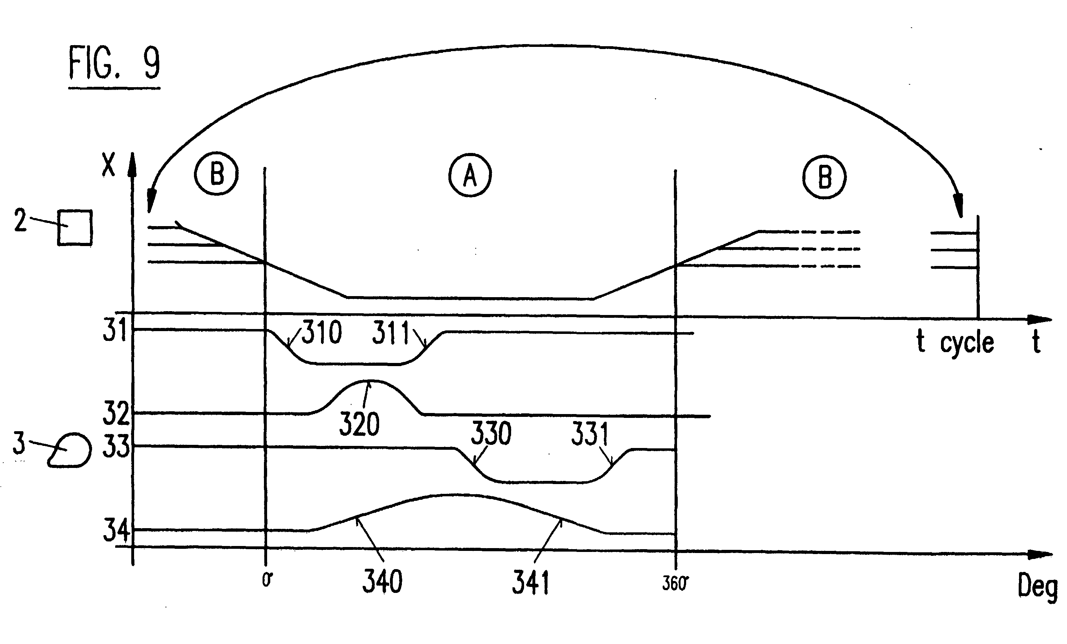

Nous allons maintenant étudier, en relation avec la figure 9, un exemple de cycle de pièces exécuté par un tour multibroches selon le procédé de l'invention. La figure 9 est un diagramme temporel illustrant la position de différents outils en fonction du temps t et de la position angulaire en degrés de l'arbre 3, au cours d'un cycle de pièce. Le cycle de pièce représenté comporte un intervalle non productif A et un intervalle d'usinage B. Afin de mieux illustrer la transition entre ces deux intervalles, le point de départ du cycle illustré sur la figure 9 est fixé au milieu de l'intervalle d'usinage B. La durée du cycle de pièces est de t_{cycle} ; un nouveau cycle identique est exécuté après t_{cycle}. Selon la vitesse des actuateurs du tour multibroches et la complexité de la pièce à usiner, la durée du cycle t_{cycle} est par exemple comprise entre 0,5 et 60 secondes.

Les fonctions effectuées pendant l'intervalle non productif A sont commandées par l'arbre à came 3. Sur cet exemple, quatre fonctions essentielles du tour multibroches sont effectuées pendant l'intervalle non productif. Sitôt après la mise en rotation de l'arbre à came 3, une première came 31 commande le déverrouillage du barillet (opération 310). Lorsque le barillet est déverrouillé, une deuxième came 32 commande l'indexage 320 du barillet à la position suivante, puis la première came 31 entraîne à nouveau le verrouillage du barillet à la nouvelle position (311). Simultanément, la came 34 entraîne le recul 340 du ravitaillement. Une troisième came 33 commande aussitôt après le desserrage des pinces (330), permettant ainsi l'avance du ravitaillement 341 commandé par la came 34. Les pinces sont ensuite à nouveau serrées sous l'action de la came 33 (opération 331).

L'encodeur 37 sur l'arbre à came 3 (figure 7), ou une came particulière, envoie ensuite un signal 8 à la commande numérique 2 qui réagit par un signal de commande d'arrêt de la rotation de l'arbre à came. Les barres étant en position d'usinage, la phase d'usinage B peut commencer. La commande numérique envoie à cet effet aux moyens d'entraînements de chaque axe, par exemple aux actuateurs électriques ou hydrauliques, des commandes de déplacement définies par le programme de pièce et correspondant aux trajectoires désirées des outils. D'autres organes et fonctions peuvent également être commandés par la commande numérique, par exemple des fonctions d'arrosage, etc..

A la fin de l'intervalle d'usinage, lorsque le barillet doit être à nouveau indexé afin que les pièces atteignent la prochaine position d'usinage, la commande numérique redonne la commande à l'arbre à came en générant un signal 7 de mise en rotation de l'arbre à came. Un nouveau cycle de pièces peut alors commencer.

Un usinage est généralement impossible pendant l'intervalle non productif A, comme expliqué ci-dessus. La commande numérique peut néanmoins poursuivre l'exécution de certaines tâches qui ne demandent pas de synchronisation avec les fonctions commandées par l'arbre à came. De même, certains déplacements d'outils ou de chariots peuvent être entrepris avant l'arrêt de l'arbre à came à la fin de l'intervalle non productif. Par exemple, le recul des chariots peut commencer au cours de la phase d'usinage et se poursuivre un instant après la mise en rotation de l'arbre à came, à condition que les outils ne puissent plus heurter d'autres pièces pendant l'indexage du barillet par exemple. A la fin de l'intervalle non productif, les chariots peuvent être avancés en position avant même l'arrêt de l'arbre à came, afin d'atteindre leur position d'usinage le plus rapidement possible lors de l'intervalle d'usinage.

Dans le mode de réalisation discuté jusqu'ici, la commande numérique attend un signal 8 de l'arbre à came pour reprendre le contrôle des fonctions du tour multibroches. Ce signal peut être généré avant la position d'arrêt de l'arbre à came, afin que la commande numérique puisse anticiper cette position d'arrêt et faire déjà avancer les chariots. Il est également possible de remplacer le signal 8 par un compteur temporel ; dans ce cas, la commande numérique 2 attend simplement un temps prédéterminé avant de reprendre de toute façon le contrôle du tour multibroches.

## Revendications

1. Procédé d'usinage de pièces dans un tour multibroches (1) selon un cycle d'usinage, qui comprend, d'une part, au moins un intervalle de temps dit productif (B), parce que concernant au moins un déplacement d'outil selon au moins un axe et, d'autre part, au moins un intervalle de temps dit non productif (A) parce que concernant la réalisation d'au moins l'une des opérations non productives que sont l'indexage du barillet, le verrouillage et déverrouillage du barillet, le ravitaillement, le serrage et desserrage des pinces du barillet, lequel procédé met en oeuvre à la fois la commande numérique (2) et la commande au moyen d'au moins une came (3),
ce procédé étant **caractérisé en ce que** :
- les déplacements d'outils effectués durant chaque intervalle productif (B) sont réalisés directement sous le contrôle de la commande numérique (2) à l'exclusion de l'intervention d'une came (3),
- tandis que les opérations indépendantes du cycle d'usinage, effectuées pendant les intervalles non productifs (A), sont réalisées sous le contrôle d'au moins une came (3) dont la rotation est gérée par la commande numérique (2).

2. Procédé d'usinage de pièces selon la revendication 1, **caractérisé en ce que** au moins certains axes d'usinage sont actionnés par ladite commande numérique (2) pendant au moins une portion dudit intervalle non productif (A).

3. Procédé d'usinage selon la revendication précédente, **caractérisé en ce que** au moins certains chariots d'usinage sont reculés au début dudit intervalle non productif (A), puis avancés à la fin dudit intervalle non productif.

4. Tour multibroches (1) pour la mise en oeuvre du procédé selon l'une des revendications précédentes, comprenant au moins un axe d'usinage contrôlé par une commande numérique, **caractérisé par** :
- un arbre à came (3) dont la rotation est contrôlée par ladite commande numérique (2) et muni d'une ou plusieurs cames (31, 32) permettant de contrôler au moins certaines fonctions du tour, dites non productives, parce que non spécifiques à la pièce usinée,
- la commande numérique (2) contrôlant directement les moyens d'entraînement des axes d'usinage, tandis que au moins certaines fonctions non productives du tour sont contrôlées par l'intermédiaire dudit arbre à came (3) dont la rotation est commandée par la commande numérique (2).

5. Tour multibroches à commande numérique selon la revendication précédente, **caractérisé en ce que** l'arbre à came (3) est muni d'un encodeur (37) fournissant un signal (8) à la commande numérique (2) dès que lesdites fonctions non productives ont été effectuées.

6. Tour multibroches à commande numérique selon la revendication 4, **caractérisé en ce que** l'arbre à came (3) est muni d'une came fournissant un signal (8) à la commande numérique dès que lesdites fonctions non productives ont été effectuées.

7. Tour multibroches à commande numérique selon l'une des revendications 4 à 6, **caractérisé en ce que** lesdites cames contrôlent les fonctions de ravitaillement de la pièce à usiner.

8. Tour multibroches à commande numérique selon l'une des revendications 4 à 7, **caractérisé en ce que** les fonctions d'indexage du barillet sont contrôlées par lesdites cames (31, 32).

9. Tour multibroches à commande numérique selon l'une des revendications 4 à 8, **caractérisé en ce que** les fonctions de verrouillage/déverrouillage du barillet sont contrôlées par lesdites cames.

10. Tour multibroches à commande numérique selon l'une des revendications 4 à 9, **caractérisé en ce que** les fonctions de serrage/desserrage des pinces sont contrôlées par lesdites cames.

11. Commande numérique pour tour multibroches à commande numérique selon l'une des revendications 5 ou 6, programmée de manière à pouvoir faire exécuter au dit tour multibroches le procédé d'une des revendications 1 à 3, cette commande numérique étant **caractérisée en ce qu'**elle permet de détecter un signal (8) signalant que les fonctions non productives ont été réalisées.

12. Support de données informatique sur lequel est enregistré un programme de gestion de commande numérique permettant d'exécuter un programme de pièces comportant des instructions de mise en rotation d'un arbre à came et d'attente d'un signal (8) de l'arbre à came signalant que les fonctions non productives ont été réalisées, permettant ainsi de contrôler un tour multibroches selon l'une des revendications 5 ou 6 de manière à exécuter le procédé d'une des revendications 1 à 3.

## Claims

1. Method of machining workpieces in a multi-spindle lathe (1) according to a machining cycle, which comprises, on the one hand, at least one interval of time referred to as productive (B), because involving at least one tool displacement along at least one axis, and, on the other hand, at least one interval of time referred to as non-productive (A), because involving achievement of at least one of the non-productive operations which are indexing the barrel, locking and unlocking the barrel, feed, clamping and unclamping of the clamps of the barrel, which method implements at the same time numerical control (2) and control by means of at least one cam (3), this method being **characterised in that** :
- the displacements of the tools carried out during each productive interval (B) are achieved directly under the control of the numerical control (2) with the exdusion of the intervention of a cam (3),
- whereas the operations independent of the machining cycle, carried out during the non-productive intervals (A), are achieved under the control of at least one cam (3), the rotation of which is generated by the numerical control (2).

2. Method of machining workpieces according to claim 1, **characterised in that** at least certain machining axes are actuated by said numerical control (2) during at least a portion of said non-productive interval (A).

3. Method of machining according to the preceding claim, **characterised in that** at least certain machining carriages are moved backwards at the beginning of the non-productive interval (A), then moved forward at the end of said non-productive interval.

4. Multi-spindle lathe (1) for implementing the method according to one of the preceding claims, comprising at least one machining axis controlled by a numerical control, **characterised by** :
- a camshaft (3), the rotation of which is controlled by said numerical control (2) and equipped with one or more cams (31, 32) permitting at least certain lathe operations, referred to as non-productive operations, to be controlled, because non-specific to the machined workpiece,
- the numerical control (2) controlling directly the means of driving of the machining axes, whereas at least certain non-productive operations of the lathe are controlled through the agency of said camshaft (3), the rotation of which is controlled through the numerical control (2).

5. Numerical control multi-spindle lathe according to the preceding claim, **characterised in that** the camshaft (3) is equipped with an encoder (37) providing a signal (8) to the numerical control (2) as soon as said non-productive operations have been carried out.

6. Numerical control multi-spindle lathe according to claim 4, **characterised in that** the camshaft (3) is equipped with a cam providing a signal (8) to the numerical control as soon as said non-productive operations have been carried out.

7. Numerical control multi-spindle lathe according to one of the claims 4 to 6, **characterised in that** said cams control the operations of feed of the workpiece to be machined.

8. Numerical control multi-spindle lathe according to one of the claims 4 to 7, **characterised in that** the operations of indexing of the barrel are controlled by said cams (31, 32).

9. Numerical control multi-spindle lathe according to one of the claims 4 to 8, **characterised in that** the operations of locking/unlocking of the barrel are controlled by said cams.

10. Numerical control multi-spindle lathe according to one of the claims 4 to 9, **characterised in that** the operations of clamping/unclamping of the damps are controlled by said cams.

11. Numerical control for a numerical control multi-spindle lathe according to one of the claims 5 or 6, programmed so as to be able to execute on said multi-spindle lathe the method of one of the claims 1 to 3, this numerical control being **characterised in that** it permits a signal (8) to be detected signalling that the non-productive operations have been carried out.

12. Information processing data carrier on which a control program for numerical control is recorded allowing a workpiece program to be executed comprising instructions for setting a camshaft in rotation and for waiting for a signal (8) from the camshaft signalling that the non-productive operations have been carried out, thus permitting a multi-spindle lathe to be controlled according to one of the claims 5 or 6 so as to execute the method of one of the claims 1 to 3.

## Patentansprüche

1. Bearbeitungsverfahren von Werkstücken in einer Mehrspindeldrehmaschine (1) gemäss einem Bearbeitungszyklus, welches einerseits mindestens ein als produktiv bezeichnetes Zeitintervall (B), während welchem mindestens ein Verschieben eines Werkzeugs entlang mindestens einer Achse erfolgt, und andererseits mindestens ein als unproduktiv bezeichnetes Zeitintervall (A) umfasst, während welchem das Ausführen von mindestens einem der unproduktiven Vorgänge wie Indexierung der Trommel, die Verriegelung und Entriegelung der Trommel, die Zuführung, das Spannen und Öffnen der Spannzangen erfolgt, welches Verfahren auf einmal die numerische Steuerung (2) und das Steuermittel, bestehend aus mindestens einer Kurve (3) einsetzt,
wobei dieses Verfahren **gekennzeichnet ist durch**:
- die Verschiebungen der Werkzeuge, die während jedem produktiven Intervall (B) ausgeführt werden, werden direkt unter der Kontrolle der numerischen Steuerung (2) unter Ausschluss des Eingriffs einer Kurve (3) realisiert,
- währenddem die unabhängigen Vorgänge des Bearbeitungszyklus, ausgeführt während den unproduktiven Intervallen (A), unter der Kontrolle von mindestens einer Kurve (3) realisiert werden, deren Rotation **durch** die numerische Steuerung (2) gelenkt wird.

2. Bearbeitungsverfahren von Werkstücken nach Anspruch 1, **dadurch gekennzeichnet, dass** mindestens gewisse Bearbeitungsachsen durch die genannte numerische Steuerung (2) während mindestens eines Teils des genannten unproduktiven Intervalls (A) aktiviert werden.

3. Bearbeitungsverfahren gemäss dem vorhergehenden Anspruch, **dadurch gekennzeichnet, dass** mindestens gewisse Bearbeitungsschlitten zu Beginn des unproduktiven Intervalls (A) zurückgefahren werden, und am Ende des unproduktiven Intervalls vorgefahren werden.

4. Mehrspindeldrehmaschine (1) zur Durchführung des Verfahrens nach einem der vorhergehenden Ansprüche, umfassend mindestens eine Bearbeitungsachse, gesteuert durch eine numerische Steuerung, **gekennzeichnet durch**:
- eine Kurvenwelle (3), deren Rotation **durch** die genannte numerische Steuerung (2) gesteuert ist, und die mit einer oder mehreren Kurven (31, 32) ausgestattet ist, wodurch erlaubt wird, mindestens gewisse, unproduktive, weil nicht spezifisch für das bearbeitete Stück, Funktionen der Drehmaschine zu steuern,
- die numerische Steuerung (2), welche direkt die Antriebsmittel der Bearbeitungsachsen steuert, währenddem mindestens gewisse unproduktive Funktionen der Drehmaschine **durch** das Zwischenschalten der genannten Kurvenwelle (3) gesteuert sind, deren Rotation **durch** die numerische Steuerung (2) gesteuert ist.

5. Mehrspindeldrehmaschine mit numerischer Steuerung nach dem vorhergehenden Anspruch, **dadurch gekennzeichnet, dass** die Kurvenwelle (3) mit einem Encoder (37) ausgestattet ist, welcher an die numerische Steuerung (2) ein Signal (8) liefert, sobald die genannten unproduktiven Funktionen ausgeführt worden sind.

6. Mehrspindeldrehmaschine mit numerischer Steuerung nach Anspruch 4, **dadurch gekennzeichnet, dass** die Kurvenwelle (3) mit einer Kurve ausgestattet ist, welche ein Signal (8) an die numerische Steuerung liefert, sobald die genannten unproduktiven Funktionen ausgeführt worden sind.

7. Mehrspindeldrehmaschine mit numerischer Steuerung nach einem der Ansprüche 4 bis 6, **dadurch gekennzeichnet, dass** die genannten Kurven die Versorgungsfunktionen der zu bearbeitenden Stücke steuern.

8. Mehrspindeldrehmaschine mit numerischer Steuerung nach einem der Ansprüche 4 bis 7, **dadurch gekennzeichnet, dass** die Funktionen der Indexierung der Trommel durch die genannten Kurven (31, 32) gesteuert sind.

9. Mehrspindeldrehmaschine mit numerischer Steuerung nach einem der Ansprüche 4 bis 8, **dadurch gekennzeichnet, dass** die Funktionen der Verriegelung/Entriegelung der Trommel durch die genannten Kurven gesteuert sind.

10. Mehrspindeldrehmaschine mit numerischer Steuerung nach einem der Ansprüche 4 bis 9, **dadurch gekennzeichnet, dass** die Funktionen der Verriegelung/Entriegelung der Spannzangen durch die genannten Kurven gesteuert sind.

11. Numerische Steuerung für Mehrspindeldrehmaschinen mit numerischer Steuerung nach einem der Ansprüche 5 oder 6, die derart programmiert ist, dass die genannte Mehrspindeldrehmaschine das Verfahren gemäss einem der Ansprüche 1 bis 3 ausführen kann, und diese numerische Steuerung **dadurch gekennzeichnet ist, dass** sie erlaubt, ein Signal festzustellen, das anzeigt, dass die unproduktiven Funktionen ausgeführt worden sind.

12. Datenträger, auf welchem ein Steuerprogramm für eine numerische Steuerung gespeichert ist, welches erlaubt, ein Teileprogramm auszuführen, umfassend Instruktionen zum in Rotation versetzen einer Kurvenwelle und Erwarten eines Signals (8) der Kurvenwelle, womit angezeigt wird, dass die unproduktiven Funktionen ausgeführt worden sind, und welches auch erlaubt, eine Mehrspindeldrehmaschine gemäss einem der Ansprüche 5 oder 6 zu steuern, zum Ausführen des Verfahrens gemäss einem der Ansprüche 1 bis 3.
